Europäisches Patentamt

European Patent Office

Office européen des brevets

(19)

(11) Veröffentlichungsnummer: **0 004 089**
**B1**

(12)

# EUROPÄISCHE PATENTSCHRIFT

(21) Anmeldenummer: **79100734.7**

(51) Int. Cl.³: **B 23 G 7/02**

(22) Anmeldetag: **12.03.79**

(54) Gewindefurcher.

(30) Priorität: **15.03.78 DE 2811193**

(43) Veröffentlichungstag der Anmeldung:
**19.09.79 Patentblatt 79/19**

(45) Bekanntmachung des Hinweises auf die Patenterteilung:
**11.02.81 Patentblatt 81/6**

(84) Benannte Vertragsstaaten:
**CH FR GB IT NL SE**

(56) Entgegenhaltungen:
**DE - U - 1 645 028**
**DE - U - 7 807 787**
**DE - C - 937 926**

**WERKSTATT UND BETRIEB**
**95. Jahrgang, September 1962,**
**München**
**W. SCHMIDT et al. "Ein neuartiges**
**Gewindeschneidwerkzeug"**
**Seiten 627 bis 630**

(73) Patentinhaber: **Spezialfabrik für**
**Präzisionsgewindeschneidwerkzeuge Ernst**
**Reime GmbH & Co KG**
**Bartholomäusstrasse 26**
**D-8500 Nürnberg (DE)**

(72) Erfinder: **Gärtner, Hans, Dr.-Ing.**
**Am Weinberg 6**
**D-8501 Schwaig-Behringersdorf (DE)**

(74) Vertreter: **Tergau, Enno et al,**
**Hefnersplatz 3 Postfach 9347**
**D-8500 Nürnberg 11 (DE)**

Gewindefurcher

Die Erfindung betrifft einen Gewindefurcher der im Oberbegriff des Anspruches 1 näher gekennzeichneten Art.

Bei derartigen z.B. aus DD 53957 bekannten Gewindefurchern ist der konische Anlaufteil ebenso wie der zylindrische Führungsteil mit Drückstollen im wesentlichen gleicher Querschnittsform versehen. Im Übergangsbereich vom konischen Anlauf- in den zylindrischen Führungsteil tritt zwangsläufig eine Unstetigkeit im Gewinde des Furchers auf, die als Steigungsversatz bezeichnet wird. Dieser Steigungsversatz ist zwangsläufig vorhanden und läßt sich in bekannter Weise nach einer mathematischen Formel berechnen. Er hat bei zerspanend arbeitenden Gewindebohrern keine wesentlichen negativen Folgen (vergl. Schmidt u.a. in "WERKSTATT UND BETRIEB" 1962, S. 627—630).

Außerdem neigt der Vorschub des vom Anlaufteil geformten Gewindes dazu, wegen der infolge der Konizität des Anlaufteiles auftretenden Axialdrücke hinter dem Vorschub der Sollsteigung zurückzubleiben.

Der Steigungsversatz und das Vorschubdefizit bewirken eine Steigungsabweichung gegenüber der Sollsteigung. Um diese Steigungsabweichung nachträglich weitgehend zu egalisieren, weist in der Regel das Führungsteil eines Gewindefurchers eine gewisse Mindestlänge auf, die mit steigender Lehrungslänge wächst. Dies erfordert jedoch neben erhöhten Fertigungskosten ein höheres Antriebsdrehmoment für den Gewindefurcher und damit auch eine höhere Belastung des Furcherschaftes.

Der Erfindung liegt die Aufgabe zugrunde, einen Gewindefurcher der eingangs genannten Art herzustellen, dessen Führungsteil gegenüber bekannten Gewindefurchern kürzer ausgestaltet werden kann, ohne daß dies bei dem gefurchten Gewinde selbst dann zu einem bemerkbaren Steigungsverzug bzw. einer Steigungsabweichung führt, wenn das Gewinde eine dem Mehrfachen des Gewindedurchmessers entsprechende Länge aufweist. Diese Aufgabe wird durch das Kennzeichen des Anspruches 1 gelöst. Die weiteren Ansprüche befassen sich mit Weiterbildungen bzw. bevorzugten Ausführungsformen des Erfindungsgegenstandes.

Der Gegenstand der Erfindung wird anhand der Figuren näher beschrieben. Es zeigen:

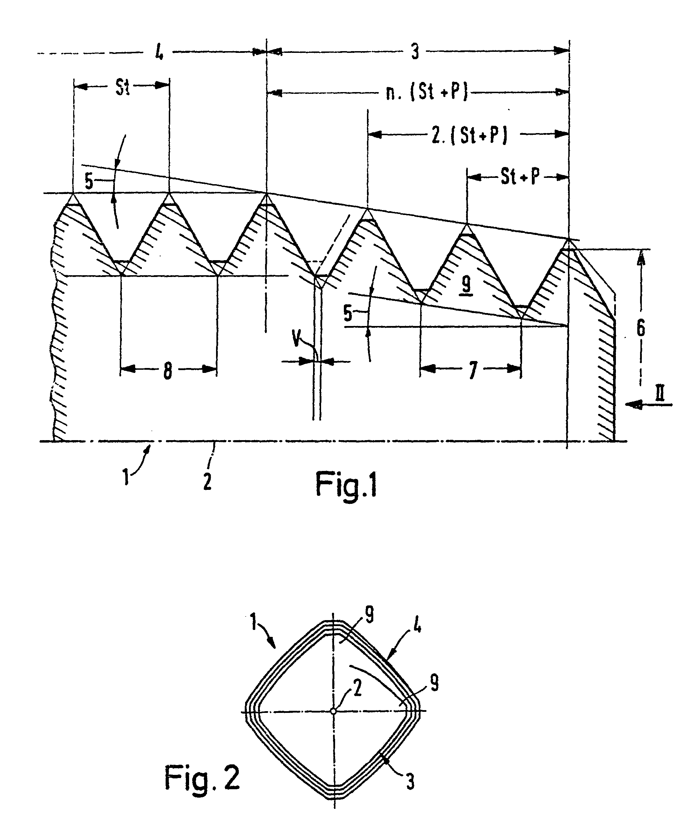

Fig. 1 einen Schnitt durch das Gewindeprofil eines Gewindefurchers nach der Erfindung,

Fig. 2 eine verkleinerte Draufsicht auf einen Gewindegang entsprechend Pfeil II in Fig. 1.

Die Längsachse des Gewindefurchers 1 ist mit 2 gekennzeichnet. Der Gewindefurcher 1 ist mit einem im wesentlichen konischen Anlaufteil 3 und einem im wesentlichen zylindrischen Führungsteil 4 versehen. Der Anlaufteil 3 kann z.B. auch eine leicht ballige Umrißform aufweisen.

Die Drückstollen 9 auch des Anlaufteiles 3 sind spitz ausgebildet.

Der Einstellwinkel des Anlaufteiles 3 ist mit 5 bezeichnet. 6 ist der Anlaufdurchmesser.

Die Gewindesteigung St de Führungsteiles 4 ist identisch mit der Soll-Gewindesteigung der zu furchenden Gewindebohrung. Die Gewindesteigung des Anlaufteiles 3 weist ein Plusmaß P gegenüber der Gewindesteigung St des Führungsteiles 4 auf. Die Gewindesteigung 7 des Anlaufteiles 3 beträgt somit St + P. Damit entspricht der tatsächliche Vorschub im Verformungs- bzw. Anlaufteil 3 dem Vorschub im Führungsteil 4.

Das Steigungsplusmaß P des Anlaufteiles 3 kann sich über mindestens einen Teil des Führungsteiles 4 fortsetzen.

Das Steigungsplusmaß P beträgt bei um 9° rechtsspiralig angeordneten Drückstollen und einer Anlauflänge von drei Gängen etwa zwischen 0,1 und 2,5% der Steigung 8 bzw. St des Führungsteiles 4. Z.B. hat sich bei einem Gewindefurcher von 6 mm Durchmesser und einem Steigungsversatz V von 30 $\mu$m zwischen Anlaufteil 3 und Führungsteil 4 ein Steigungsplusmaß P von 12 $\mu$m als besonders vorteilhaft erwiesen. Jenachdem, ob und in welchem Drehsinn die Drückstollen 9 am Furcherumfang spiralig angeordnet sind, kann das Plusmaß P nach unten oder nach oben von einer Mittelgröße, die einer nichtspiraligen Anordnung der Drückstollen entspricht, abweichen.

Mit einem erfindungsgemäß ausgebildeten Gewindefurcher von 6 mm Durchmesser wurde ein Gewinde von dem Vierfachen des Gewindedurchmessers entsprechender Länge, d.h. ein 24 mm tiefes Gewinde ohne meßbaren Steigungsverzug hergestellt, obwohl bei drei Anlaufgängen lediglich zwei Führungsgänge vorhanden waren.

An den Führungsteil 4 kann sich in Richtung auf den Schaft ein Absetzteil anschließen, um bei Durchgangslochgewinden eine Rückführung des Gewindefurchers 1 zu ermöglichen.

**Patentansprüche**

1. Gewindefurcher (1) mit einem im wesentlichen konischen Anlauf- (3) und einem im wesentlichen zylindrischen Führungsteil (4), dadurch gekennzeichnet, daß die Gewindesteigung (7) des Anlaufteiles (3) über dessen Gesamtlänge ein Plusmaß (P) gegenüber der Gewindesteigung (8) des Führungsteiles (4) aufweist.

2. Gewindefurcher nach Anspruch 1, dadurch gekennzeichnet, daß sich das Steigungsplusmaß (P) des Anlaufteiles (3) auch über mindestens einen Teil des Führungsteiles (4) fortsetzt.

3. Gewindefurcher nach Anspruch 1 oder 2, dadurch gekennzeichnet, daß je nach Gewindesteigungswinkel das Steigungsplusmaß (P) zwischen etwa 0,1 und 2,5% der Gewindesteigung (8) des Führungsteils (4) beträgt.

4. Gewindefurcher nach einem oder mehreren der vorhergehenden Ansprüche, dadurch gekennzeichnet, daß die Länge des Führungsteiles (4) mindestens einen und maximal vier Gänge beträgt.

### Claims

1. Screw tap or screw plate (1) with an essentially conical shouldered threaded adapter part (3) and a cylindrical threaded guide part (4), characterized in that the thread pitch (7) of the conical shouldered adapter part (3) is extend by a plus-measure (P) over the complete length of adapter part (3) compared to the thread pitch (8) of the cylindrical threaded guide part (4).

2. Screw tap or screw plate according to claim 1, characterized in that the plus-measure (P) of the adapter part (3) is ranging at least partially into the cylindrical threaded guide part (4).

3. Screw tap or screw plate according to claims 1 or 2, characterized in that the plus-measure (P) is determined depending on the lead angle between 0,1% and 2,5% of the thread pitch (8) of the cylindrical guide part (4).

4. Screw tap or screw plate according to claims 1, 2 or 3, characterized in that the cylindrical guide part (4) is at minimum one turn of a thread at maximum four turns of a thread long.

### Revendications

1. Outil à fileter (1) comprenant une partie d'entrée (3) sensiblement conique et une partie de guidage (4) sensiblement cylindrique, caractérisé en ce que le pas de vis (7) de la partie d'entrée (3) présente sur toute sa longueur une surdimension ou écart positif (P) par rapport au pas de vis (8) de la partie de guidage (4).

2. Outil à fileter selon la revendication 1, caractérisé en ce que l'écart positif (P) de la partie d'entrée (3) se prolonge également sur une portion au moins de la partie de guidage (4).

3. Outil à fileter selon la revendication 1 ou 2, caractérisé en ce que, suivant l'angle d'hélice du filet, l'écart positif (P) est compris entre environ 0,1 et 2,5% du pas de vis (8) de la partie de guidage (4).

4. Outil à fileter selon l'une quelconque des revendications précédentes, caractérisé en ce que la longueur de la partie de guidage (4) correspond au moins à une spire et tout au plus à quatre spires de vis.

Fig.1

Fig. 2